# EUROPEAN PATENT APPLICATION

(11) **EP 2 899 662 A1**
(43) Date of publication of application: **29.07.2015**
(21) Application number: 15152557.3
(22) Date of filing: 26.01.2015
(51) Int. Cl.: G06F 21/12, G07F 17/32, G06Q 10/00

(54) **Code-based enabling of product capabilities**

(30) Priority: 24.01.2014 US 201414163830
(71) Applicant: 2911 Concepts LLC, Bellevue, WA 98004 (US)
(72) Inventor: Slaczka, Jeremiah, Bellevue, WA Washington 98004 (US)
(74) Representative: Dixon, Philip Matthew

(57) **Abstract**

A first code may be obtained by a computing system. The computing system may support a first interactive media product and a second interactive media product. The first interactive media product and the second interactive media product may be thematically associated. It may be determined that activating the first code enables a first capability in the first interactive media product, and also enables a second capability in the second interactive media product. The first code may be activated, and based on activation of the first code, the first capability in the first interactive media product and the second capability in the second interactive media product may be enabled. The first capability and the second capability may be different.

## Description

### BACKGROUND

Media franchises may include products taking the form of various types of electronic media, such as movies, television shows, video games, web sites, and electronic books, as well as non-electronic content, such as books, newsletters, and clothing (e.g., t-shirts). Typically, a media franchise focuses on particular characters, stories, and settings. In some cases, media franchises are purely fictional, while in other cases this content may relate to at least some real people, be based on actual events, and/or take place in real-world locations. Regardless, each individual product is typically a stand-alone entity, despite thematic commonality with other products in the same media franchise.

### SUMMARY

Media franchises may take many forms. Some of the most common include a series of television shows, movies, and/or books. In some cases, there is cross-over between the various types of media in the franchise. Examples of these transmedia franchises include movie adaptations of books, video game adaptations of movies, clothing and/or action figures based on videos games, and so on. The most successful transmedia franchises may encompass products across several electronic and/or non-electronic media.

The advantages of developing a transmedia franchise include creating sense of familiarity and identity with consumers, as well as leveraging the commercial success of one type of media (e.g., a movie) into profit opportunities in another type of media (e.g., a book). Some popular media franchises have been active for over 50 years.

In media franchises with multiple interactive media products (e.g., video games), each of these products are typically an independent entity. For instance, the game state in a console-based franchise video game may have no correlation with the game state of a smartphone-based video game in the same franchise. Linking the states of these games, even in a limited sense, with one another or each with another franchise product, may further the popularity of both games.

As an example, a media franchise encompassing interactive media products may support codes. These codes may be generated by the franchise owner, a third party (e.g., a partner of the franchise owner) or a user of the products. Each code may enable particular capabilities of the respective products. These capabilities may be features, functions, or content that are specific to one of the products, or shared between the products. Thus, when a consumer activates such a code, different or similar capabilities may be enabled in each product.

To further this example, suppose that the media franchise includes a console-based video game, a smartphone-based video game, an electronic book, and a movie. A single code could enable a weapon or tool to help the player in the console-based video game, a new avatar in the smartphone-based video game, an alternative ending to the e-book, and special content in the movie (e.g., outtakes or a "making of" documentary). A code could also enable certain features in non-media and/or non-interactive franchise products as well.

The code may come from various sources. For instance, a piece of physical merchandise (e.g., a t-shirt or meal receipt) may include an indication of the code. Alternatively, the code may be generated by or earned by playing a different video game. In yet another alternative, the code could be generated by an individual and shared with his or her social media followers. In the latter case, as more players activate the code, more capabilities (or more powerful capabilities) may be enabled for the individual who generated the code and/or those who activated it.

Accordingly, in an example embodiment, a first code may be obtained by a computing system. The computing system may support a first interactive media product and a second interactive media product. The first interactive media product and the second interactive media product may be thematically associated. It may be determined that activating the first code enables a first capability in the first interactive media product, and also enables a second capability in the second interactive media product. The first code may be activated, and, based on activation of the first code, the first capability in the first interactive media product and the second capability in the second interactive media product may be enabled. The first capability and the second capability may be different.

In another example embodiment, an article of manufacture may include a non-transitory computer-readable medium, having stored thereon program instructions that, upon execution by a computing system, cause the computing system to perform operations. These operations may involve obtaining a code. The computing system may support a first interactive media product and a second interactive media product. The first interactive media product and the second interactive media product may be thematically associated. The operations may further involve determining that activating the code enables a first capability in the first interactive media product and enables a second capability in the second interactive media product. The operations may additionally involve activating the code. The operations may also involve, based on activation of the code, enabling the first capability in the first interactive media product and enabling the second capability in the second interactive media product. The first capability and the second capability may be different.

In yet another example embodiment, a computing system may include an online portal configured to receive a code. The computing system may also include an interactive media product platform configured to support a first interactive media product and a second interactive media product, determine that activating the code enables a first capability in the first interactive media product and enables a second capability in the second interactive media product, activate the code, and based on activation of the code, enable the first capability in the first interactive media product and enable the second capability in the second interactive media product. The first interactive media product and the second interactive media product may be thematically associated. The first capability and the second capability may be different.

These as well as other embodiments, aspects, advantages, and alternatives will become apparent to those of ordinary skill in the art by reading the following detailed description, with reference where appropriate to the accompanying drawings. Further, it should be understood that this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

### BRIEF DESCRIPTION OF THE DRAWINGS

Figure 1 is a high-level depiction of a computing platform that supports interactive media products, according to an example embodiment.
Figure 2 illustrates a schematic drawing of a computing device, according to an example embodiment.
Figure 3 illustrates a schematic drawing of a networked server cluster, according to an example embodiment.
Figure 4 depicts a process for activating and using codes related to interactive and non-interactive products, according to an example embodiment.
Figure 5 depicts a message flow for generating and activating codes, according to an example embodiment.
Figure 6 is a flow chart, according to an example embodiment.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. Other embodiments can be utilized, and other changes can be made, without departing from the scope of the subject matter presented herein.

Thus, the example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

Additionally, it should be understood that the functions, features, methods, devices, and systems disclosed herein may operate with or on non-media and/or non-interactive products. While some of the disclosure herein focuses on media and/or interactive products, these are merely example embodiments. Thus, the scope of this disclosure is non-limiting and may encompass a wide variety of products.

### 1. Overview

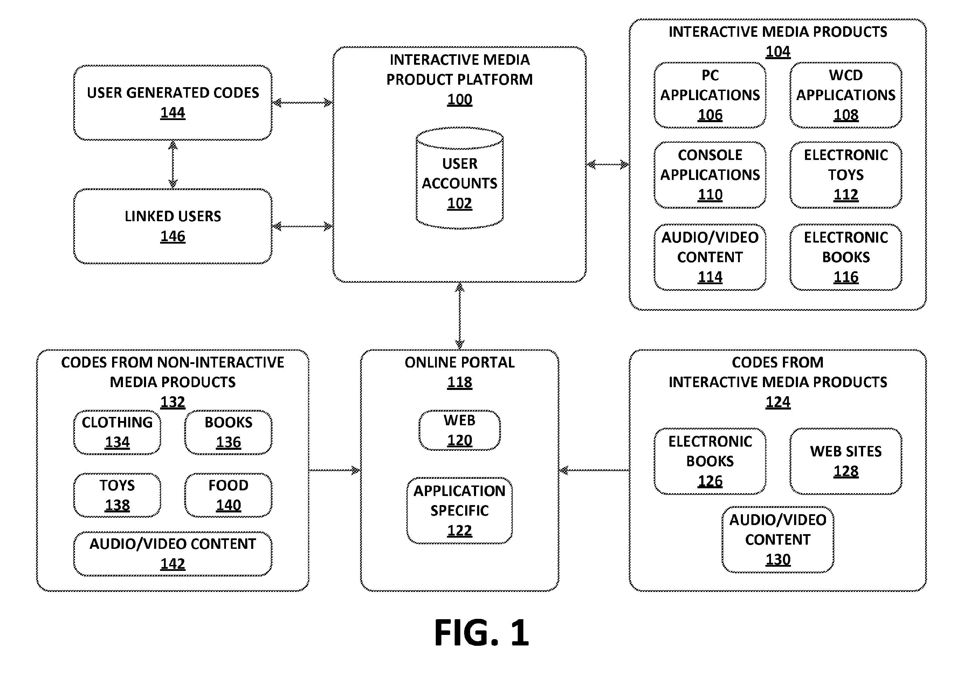

Figure 1 is a high-level depiction of a computing platform that supports interactive media products. Interactive media product platform 100 may include one or more computing devices, and may also include or have access to user accounts 102.

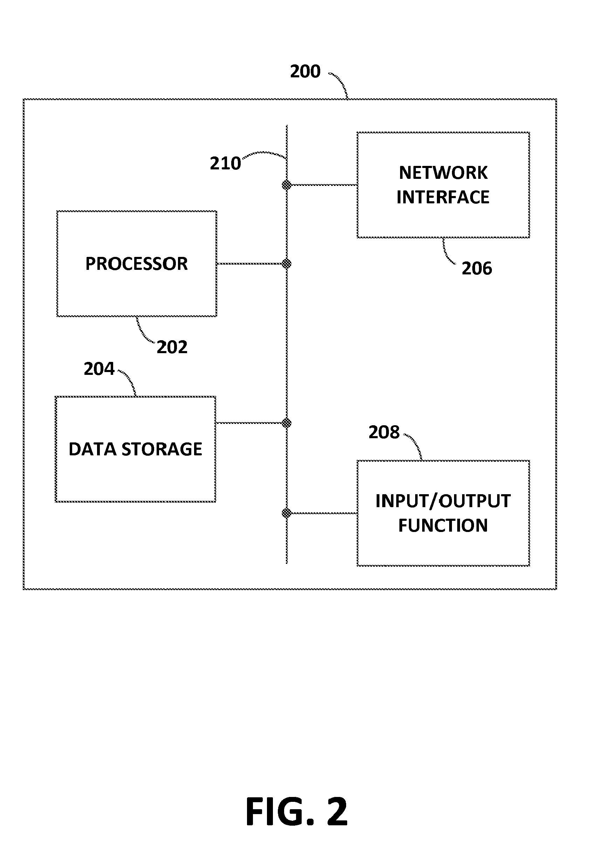

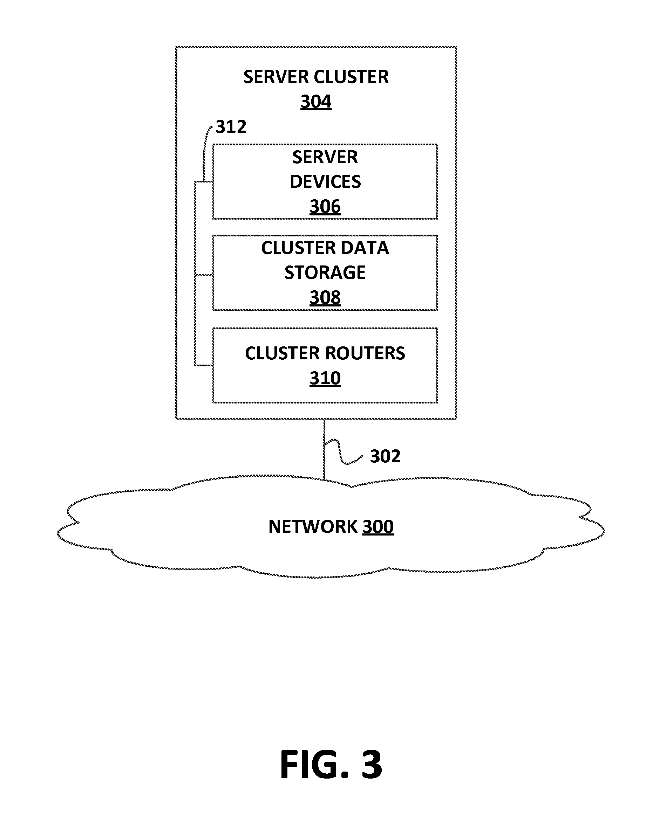

Interactive media product platform 100 may facilitate online gaming from one or more client platforms, facilitate the serving of media (e.g., audio and/or video), facilitate the serving of electronic books, facilitate interactions with electronic toys, and/or facilitate other types of interactive media. The physical hardware supporting interactive media product platform 100 may include, for example, computing device 200 and/or server cluster 304, as illustrated in Figures 2 and 3, respectively.

User accounts 102 may be a database and/or some other organization of information that represents attributes of one or more users of interactive media product platform 100. Thus, for each user, user accounts 102 may include a username, email address, physical address, phone number, billing information, and/or associations with one or more interactive media products 104 to which the respective user has access.

Interactive media products 104 may include various types of personal computer (PC) applications 106, wireless communication device (WCD) applications 108, console applications 110, electronic toys 112, audio / video content 114, electronic books 116, and so on. In some embodiments, interactive media products 104 may each belong to the same transmedia franchise, and therefore may be thematically associated. As an example, the same or similar characters, stories, events, locations, and/or settings may be represented across one or more of PC applications 106, WCD applications 108, console applications 110, electronic toys 112, audio / video content 114, and electronic books 116. Such themes may also apply to non-media and/or non-interactive products, such as wearable devices, clothing, food and food-relative products, etc.

Alternatively, some of interactive media products 104 may belong to a different thematically associated media franchise. Thus, cross-franchise promotion may be enabled between two independent, but perhaps topically related, franchises. Regardless, thematic association may serve to link, through codes, various products (e.g., video games, movies, books, and/or clothing) related to one or more fictional or quasi-fictional universes.

PC applications 106 may include one or more applications that operate on PC-based client devices. WCD applications 108 may include one or more applications that operate on, for instance, cell phones, smartphones, tablets, electronic book readers, mobile devices, and/or mobile gaming devices. Console applications 110 may include one or more applications that operate on video game console devices, set top boxes, home media client devices (e.g., televisions, digital video disk (DVD) players, digital video recorders (DVRs)), and so on. Electronic toys may include various types of electronic entertainment or educational devices (e.g., robotics kits, remote control vehicles, etc.), that possibly support network connectivity. Audio / video content 114 may include various types of music, video, and/or still image content that can be downloaded or streamed to a client device for playout. Electronic books 116 may include publications in digital form that may include text and/or images, and that can be viewed using an electronic book reader or another type of client device. Some electronic books 116 may be interactive, in that users can manipulate images, and or access networked content with the publication (e.g., upon request, the electronic book reader may download content related to the electronic book). Nonetheless, other types of media products may be included in interactive media products 104, and the descriptions above are for purposes of example and are not intended to be limiting.

Particularly, PC applications 106, WCD applications 108, and console applications may include video games that have both a client and a server component. The server component may operate on (or may be supported by) interactive media product platform 100, and the client component may operate on the user's respective PC, WCD, or console platform.

Examples of such video game applications include virtual worlds. These virtual worlds allow real-world users to immerse themselves in simulated, on-line or off-line environments. Many virtual worlds have game-like qualities, such as tangible goals, achievements, and perhaps some form of a score or ranking. However, other virtual worlds are open-ended simulations, with no particular objective other than for users to explore and interact with a synthetic environment and other users. Some virtual worlds are persistent, on-line, multiuser applications that are available 24 hours a day, 7 days a week. Thus, events continue to take place in a virtual world even when some of its users are not playing or are off-line.

A virtual world may be presented on a user's computer as a three-dimensional simulation, either from a first-person or third-person perspective. A user may be represented as an "avatar" of humanoid (but not necessarily human) form that can move about and interact with in-game objects and other avatars. Alternatively or additionally, a user may be non-corporeal, taking on little or no precise form, but may be able to view and manipulate the virtual world from various perspectives. Many virtual worlds also have a theme, such as war, fantasy, science-fiction, or an imitation of the real world. Avatar appearance and abilities may be based on a virtual world's respective theme. Such a theme may be consistent with that of a transmedia franchise.

With respect to client /server architecture, virtual worlds typically encompass both server software that operates a virtual world in a persistent fashion, and client software that users download, or otherwise install on their client devices, to connect to the virtual world. Often, the client software is substantial because it includes a sophisticated 3-D graphics engine, as well as graphics files, used to simulate the virtual world.

Turning back to Figure 1, each of interactive media products 104 may include one or more capabilities that can be enabled by activating particular codes. Examples of these capabilities may vary within an interactive media product, as well as across a group of thematically associated interactive media products. For instance, in a video game, capabilities that can be enabled may include extra levels, maps, and/or locations, weapons, character powers and abilities, and/or additional difficulty settings. In an electronic book, capabilities that can be enabled may include textual annotations (e.g., author's notes), alternative endings, pictures and/or artwork, etc. For audio / video content, capabilities that can be enabled may include remixes and/or different versions of songs, alternative endings and/or additional scenes of movies, and so on.

Throughout the discussion herein, the term "enable" is used to refer to how codes may modify, enhance, or otherwise change the operation of media products. Thus, in full generality, this "enabling" may result in any type of alteration of a media product and/or the user experience associated with that media product.

These capabilities may be activated on a per-user, per-user-group, or per-product basis. For instance, a per-user capability may be enabled for a single user at a time. Thus, some users of an interactive media product might have a per-user capability enabled, while other might not. A per-user-group capability may be enabled for a specific group of users, while remaining disabled for other groups of users. A per-product capability may be enabled for the interactive media product itself. Thus, any user accessing the interactive media product would be able to make use of the capability.

Moreover, each interactive media product could potentially have few or many capabilities. In some cases, an interactive media product could have tens, hundreds, thousands, or more distinct capabilities. Likewise, users and groups of users of this interactive media product might be able to make use of multiple capabilities.

Additionally, the enabling of some capabilities may be contingent on the enabling of one or more other capabilities. For instance, capability C might only be able to become enabled once capabilities A and B are enabled.

It should be understood that capabilities are not limited to the examples provided above. A capability may include any feature, function, and/or content associated with an interactive media product.

One possible way of enabling one or more particular capabilities is through use of a code. A code might be an alphanumeric or text string, some form of graphical image (e.g., a quick response (QR) code image or a CAPTCHA image), a unique uniform resource locator (URL), an auditory signal, or some other mechanism that could enable a capability. In some cases, codes may map to the capabilities that they enable in a one-to-one fashion. In other cases, one code could enable multiple capabilities, or multiple codes could enable the same capability. Regardless, the activation of a code via interactive media product platform 100 may result in one or more capabilities being enabled.

In order to activate a code, online portal 118 may contain a web interface 120 and/or one or more application-specific interfaces 122. Each of these interfaces may be a conduit, channel, or other mechanism for activating a code. For instance, web interface 120 might prompt a user to enter an alphanumeric code via a web page. Once entered, online portal 118 may provide a representation of this code to interactive media product platform 100, which then may activate the code, thus enabling the associated capability or capabilities.

On the other hand, a user may receive a code in the form of a QR code printed in a book or on another type of physical product. With his or her smartphone or tablet camera, the user may capture an image of the QR code via an application (app) operating on the smartphone or tablet. This app may then provide a representation of the QR code to online portal 118 via one of application-specific interfaces 122. Online portal 118 may provide a representation of this code to interactive media product platform 100, which then may activate the code, thus enabling the associated capability or capabilities.

In some embodiments, online portal 118 may be part of, or otherwise combined with, interactive media product platform 100. In other embodiments, online portal 118 may be physically distinct from interactive media product platform 100 (e.g., these two components may operate on different devices). In the latter case, online portal 118 and interactive media product platform 100 may communicate via a network or point to point link.

A code may be derived from, generated by, and/or associated with one or more interactive or non-interactive media products. For example, codes from interactive media products 124 may include codes from electronic books 126, web sites 128, and audio / video content 130. As further examples, codes from non-interactive media products 132 may include codes from clothing 134, books 136, toys 138, food products 140, and audio / video content 142.

It should be understood that audio and video content can be interactive or non-interactive, based on how that content is produced and delivered to users. For instance, a movie DVD may include some form of interactivity, whereas a movie shown in a theater generally does not. Thus, interactive audio / video content 130 and non-interactive audio / video content 142 are considered separately.

Regardless, a transmedia franchise can encourage users of a particular type of media in the franchise to purchase, play and/or use other types of media from the franchise. For instance, a user who plays a video game in the transmedia franchise might be inspired to purchase a franchise t-shirt, because the t-shirt includes a code that can be used to enable capabilities in the video game that would be otherwise unavailable. Similarly, a user of an electronic book in the transmedia franchise might be inspired to use a franchise web site in order to obtain a possibly different code that enables capabilities in the electronic book that would be otherwise unavailable.

Another type of code may be user-generated codes 144. These codes may be created by a user of one or more of interactive media products 104. The user may generate the code via online portal 118 or through some other mechanism. For instance, the user might access online portal 118 via web interface 120, and be prompted to generate a code. Once generated, such a code may be associated with the user in user accounts 102, and the user would have the opportunity to store the code on one or more of his or her client devices.

The user then could publish the code and/or make the code available to other users and individuals. For instance, the user might publish the code to his or her friends, coworkers, and/or social media followers. These other users may then be able to enter the code via online portal 118, thus activating the code for their account, and becoming one of linked users 146.

A user-generated code may operate differently from other types of codes. For instance, the significance of the code may increase with the total number of linked users 146 who have activated the code. For instance, suppose that an interactive media product for which the code enables capabilities is a video game. Suppose further than the code enables use of an item (e.g., a weapon) that could help users achieve certain goals in the video game. Then, the power of this item might grow with the number of linked users 146 who have activated that code. As an example, if there are fewer than 100 linked users 146, the weapon might be relatively weak. However, if there are from 100 to 1000 linked users 146, the weapon might be moderately powerful, and if there are over 1000 linked users 146, the weapon might be very powerful.

Additionally, the user who generated the code might also enjoy the benefit of these activations, perhaps in a different fashion from linked users 146. For instance, the user who generated the code might gain access to a more powerful version of the weapon, and this weapon could scale in power with the number of activations as well. Alternatively or additionally, the user who generated the code might gain some other sort of benefit, such as discounts on media franchise products, free services related to the media franchise, financial compensation, and so on.

User-generated code might also facilitate a form of "celebrity endorsement" of one or more of interactive media products 104. As an example, a popular sports figure, such as a basketball player, might have thousands, or even millions, of social network followers and fans. The player might generate a code and publish it to his or her followers and fans. These followers and fans might activate the code in their respective user accounts 102, thus becoming linked users 146. The code might enable content related to the player in various interactive media products 104. For instance, a console application 110 might be a basketball video game, and activating the code in a user account 102 may enable an avatar of the player as a playable character in the video game. In another example, activation of the code might enable access to special pictures or chapters in an electronic book 116 autobiography of the player.

It should be understood that additional techniques, steps and procedures may be used within the architecture of Figure 1, and that the examples provided herein are for purposes of illustration and are not intended to be limiting. The architecture of Figure 1 may be a generic, enabling platform that can be used in ways beyond those described herein. For instance, various types of promotions, business models, and/or entertainment strategies might be developed based on the functions and features of interactive media product platform 100, online portal 118, and associated components, services and content. These other embodiments may result in ways of using codes that result in new opportunities for transmedia franchises.

Regardless, it should also be understood that interactive media product platform 100, online portal 118, as well as any other function associated with the architecture of Figure 1, can be operated on or by one or more computing devices. These computing devices may be organized in a standalone fashion, in cloud-based (networked) computing environments, or in other arrangements. Examples are provided in the next section.

### 2. Example Commuting Devices and Cloud-Based Computing Environments

Figure 2 is a simplified block diagram exemplifying a computing device 200, illustrating some of the functional components that could be included in a computing device arranged to operate in accordance with the embodiments herein. Example computing device 200 could be a personal computer (PC), laptop, server, or some other type of computational platform. For purposes of simplicity, this specification may equate computing device 200 to a server from time to time, and may also refer to some or all of the components of computing device 200 as a "processing unit." Nonetheless, it should be understood that the description of computing device 200 could apply to any component used for the purposes described herein.

In this example, computing device 200 includes a processor 202, a data storage 204, a network interface 206, and an input/output function 208, all of which may be coupled by a system bus 210 or a similar mechanism. Processor 202 can include one or more CPUs, such as one or more general purpose processors and/or one or more dedicated processors (e.g., application specific integrated circuits (ASICs), digital signal processors (DSPs), network processors, etc.).

Data storage 204, in turn, may comprise volatile and/or non-volatile data storage and can be integrated in whole or in part with processor 202. Data storage 204 can hold program instructions, executable by processor 202, and data that may be manipulated by these instructions to carry out the various methods, processes, or functions described herein. Alternatively, these methods, processes, or functions can be defined by hardware, firmware, and/or any combination of hardware, firmware and software. By way of example, the data in data storage 204 may contain program instructions, perhaps stored on a non-transitory, computer-readable medium, executable by processor 202 to carry out any of the methods, processes, or functions disclosed in this specification or the accompanying drawings.

Network interface 206 may take the form of a wireline connection, such as an Ethernet, Token Ring, or T-carrier connection. Network interface 206 may also take the form of a wireless connection, such as IEEE 802.11 (Wifi), BLUETOOTH®, or a wide-area wireless connection. However, other forms of physical layer connections and other types of standard or proprietary communication protocols may be used over network interface 206. Furthermore, network interface 206 may comprise multiple physical interfaces.

Input/output function 208 may facilitate user interaction with example computing device 200. Input/output function 208 may comprise multiple types of input devices, such as a keyboard, a mouse, a touch screen, and so on. Similarly, input/output function 208 may comprise multiple types of output devices, such as a screen, monitor, printer, or one or more light emitting diodes (LEDs). Additionally or alternatively, example computing device 200 may support remote access from another device, via network interface 206 or via another interface (not shown), such as a universal serial bus (USB) or high-definition multimedia interface (HDMI) port.

In some embodiments, one or more computing devices may be deployed in a networked architecture. The exact physical location, connectivity, and configuration of the computing devices may be unknown and/or unimportant to client devices. Accordingly, the computing devices may be referred to as "cloud-based" devices that may be housed at various remote locations.

Figure 3 depicts a cloud-based server cluster 304 in accordance with an example embodiment. In Figure 3, functions of computing device 200 may be distributed between server devices 306, cluster data storage 308, and cluster routers 310, all of which may be connected by local cluster network 312. The number of server devices, cluster data storages, and cluster routers in server cluster 304 may depend on the computing task(s) and/or applications assigned to server cluster 304.

For example, server devices 306 can be configured to perform various computing tasks of computing device 200. Thus, computing tasks can be distributed among one or more of server devices 306. To the extent that these computing tasks can be performed in parallel, such a distribution of tasks may reduce the total time to complete these tasks and return a result.

Cluster data storage 308 may be data storage arrays that include disk array controllers configured to manage read and write access to groups of hard disk drives. The disk array controllers, alone or in conjunction with server devices 306, may also be configured to manage backup or redundant copies of the data stored in cluster data storage 308 to protect against disk drive failures or other types of failures that prevent one or more of server devices 306 from accessing units of cluster data storage 308.

Cluster routers 310 may include networking equipment configured to provide internal and external communications for the server clusters. For example, cluster routers 310 may include one or more packet-switching and/or routing devices configured to provide (i) network communications between server devices 306 and cluster data storage 308 via cluster network 312, and/or (ii) network communications between the server cluster 304 and other devices via communication link 302 to network 300.

Additionally, the configuration of cluster routers 310 can be based at least in part on the data communication requirements of server devices 306 and cluster data storage 308, the latency and throughput of the local cluster networks 312, the latency, throughput, and cost of communication link 302, and/or other factors that may contribute to the cost, speed, fault-tolerance, resiliency, efficiency and/or other design goals of the system architecture.

### 3. Example Code Uses

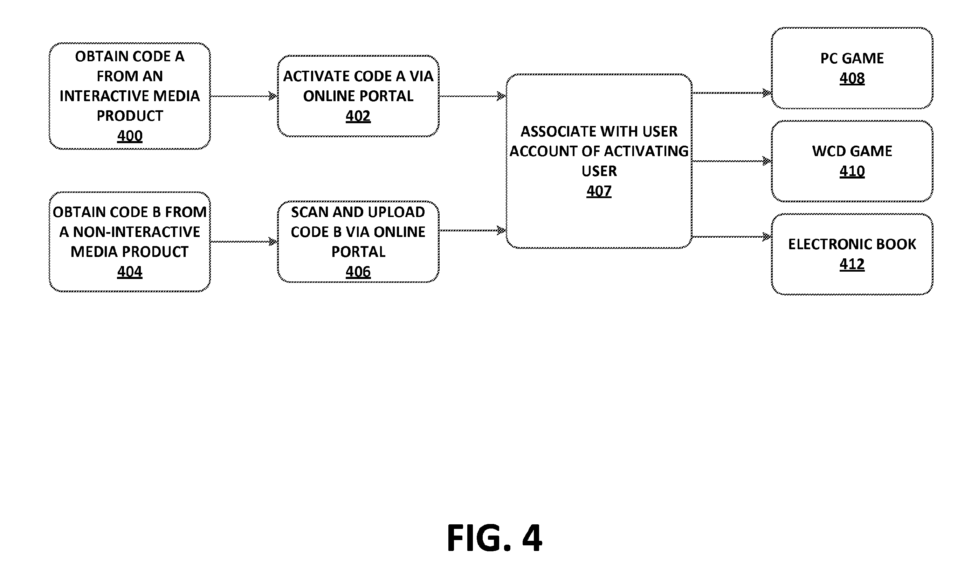

Figure 4 depicts an example process for activating and using codes related to interactive and non-interactive products. At block 400, code A, a code from an interactive media product, may be obtained. Code A may enable one or more capabilities in other interactive media products from the same media franchise. The interactive media product from which code A was obtained may be a video game, a web site, audio / video content, or some other form of product. Code A may be embedded within or otherwise associated with the interactive media product.

Regardless, at block 402, the user may activate code A via an online portal, such as online portal 118. The user may manually enter code A into the portal, or this process may be automated to at least some extent. At block 407, code A may be associated with the user's account in user accounts 102, and interactive media product platform 100 may enable the capabilities of code A in one or more of PC game 408, WCD game 410, and electronic book 412.

At block 404, code B, a code from a non-interactive media product, may be obtained. Code B may also enable one or more capabilities in the interactive media products of the media franchise. Code B may enable capabilities different from those enabled by Code A.

At block 406, Code B may be activated via an online portal, such as online portal 118. At block 407, code B may be associated with the user's account in user accounts 102, and interactive media product platform 100 may enable the capabilities of code B in one or more of PC game 408, WCD game 410, and electronic book 412.

In some embodiments, one or more of PC game 408, WCD game 410, and electronic book 412 may not exist, or may not be released, when the code is activated. For instance, suppose that a user activates code A in March 2015, and that at this time PC game 408 and electronic book 412 have been released, but WCD game 410 has not been released. Thus, at the time of activation, the capabilities of code A may be enabled in PC game 408 and electronic book 412, but not in WCD game 410.

Suppose further that WCD game 410 is released in January 2016. To the extent that WCD game 410 supports one or more of the capabilities of code A, these capabilities may be automatically activated upon the release of WCD game 410, or upon a user who has activated code A registering for use of WCD game 410. In this way, a code may enable capabilities in currently-released interactive media products, as well as enable capabilities in upcoming interactive media products.

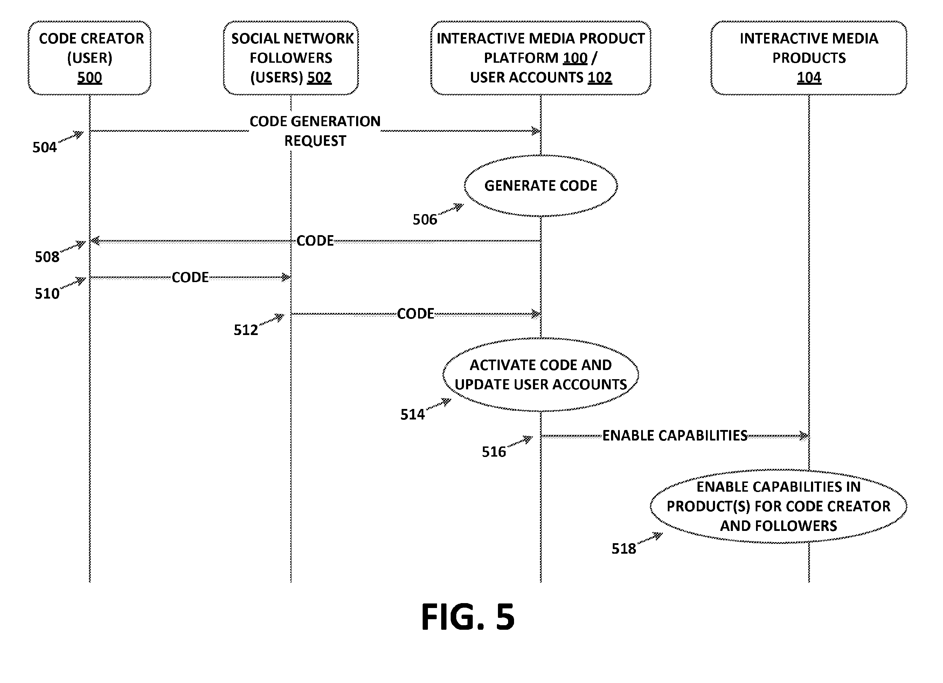

Figure 5 depicts an example process for generating and activating codes. In Figure 5, a code creator 500 may generate and publish a code to his or her social network followers 502. Social network followers may also be referred to, for example, as "contacts" or "friends." Code generator 500 and social network followers 502 may be users of interactive media product platform 100 and may each maintain a respective account in user accounts 102. The code may enable particular capabilities in interactive media products 104.

At step 504, code creator 500 may provide a code generation request to interactive media product platform 100. At step 506, possibly in response to this request, interactive media product platform 100 may generate a code. Interactive media product platform 100 may also associate the code with the account of code creator 500 in user accounts 102. At step 508, interactive media product platform 100 may provide the code to code creator 500.

At step 510, code creator 500 may publish, or otherwise provide, the code to social network followers 502. At step 512, at least some of social network followers 502 may provide the code to interactive media product platform 100.

At step 514, interactive media product platform 100 may activate the code for the social network followers 502 who provided the code, and may update their user accounts accordingly. For instance, interactive media product platform 100 may associate the code with each of their user accounts in user accounts 102.

At step 516, interactive media product platform 100 may instruct interactive media products 104 to enable the capabilities of the code in the associated user accounts. Thus, at step 518, interactive media products 104 may enable these capabilities for the social network followers who entered the code, and possibly the code creator as well.

### 4. Example Operations

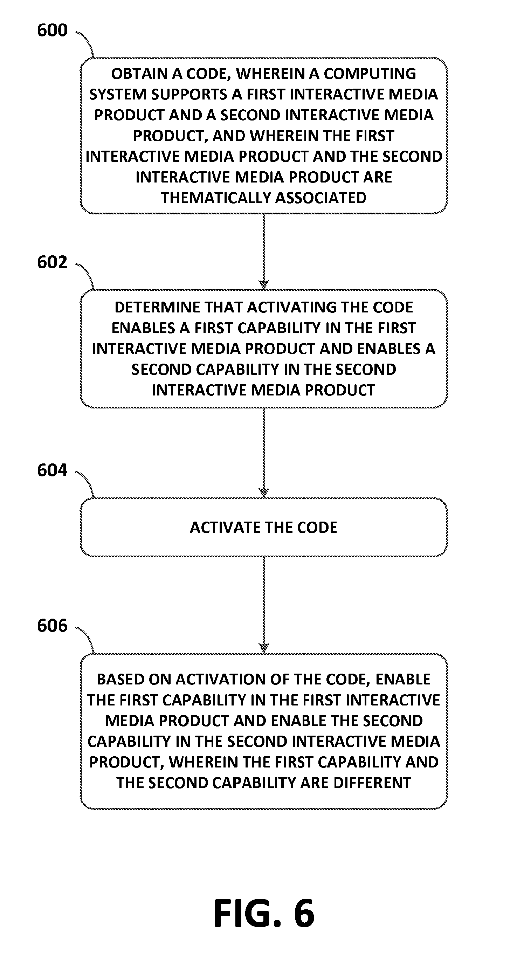

Figure 6 is a flow chart illustrating a method according to an example embodiment. The process illustrated by Figure 6 may be carried out by a computing device, such as computing device 200, and/or a cluster of computing devices, such as server cluster 304. However, the process can be carried out by other types of devices or device subsystems. For example, the process could be carried out by a portable computer, such as a laptop or a tablet device. Further, and as noted above, this process may involve non-media and/or non-interactive products.

At block 600, a first code may be obtained by a computing system. The computing system may support a first interactive media product and a second interactive media product. The first interactive media product and the second interactive media product may be thematically associated. For instance, the first interactive media product and the second interactive media product may be part of a transmedia franchise.

In some embodiments, the first code may include a text string (e.g., an alphanumeric or ASCII string, perhaps in the form of a unique URL). In other embodiments, the first code may include graphics (e.g., a QR code image or a CAPTCHA image). Further, the first code may be related to an interactive non-interactive product that is thematically associated with the first interactive media product and the second interactive media product.

At block 602, it may be determined that activating the first code enables a first capability in the first interactive media product and enables a second capability in the second interactive media product. This determination may be made, for instance, by looking up the code in a database that maps codes to associated media products and/or to capabilities that the code enables in these media products.

The computing system may include accounts (e.g., user accounts) that facilitate holders of the accounts with access to the first interactive media product and the second interactive media product. The first code may have been generated in association with a particular account. Moreover, activating the first code may enable the first capability and the second capability for a particular account.

At block 604 the first code may be activated. At block 606, based on activation of the first code, the first capability may be enabled in the first interactive media product and the second capability may be enabled in the second interactive media product. The first capability and the second capability may be different.

In some embodiments, the first interactive media product may be a first video game that operates at least in part on a first client platform. The second interactive media product may be a second video game that operates at least in part on a second client platform, and the second interactive media product might not operate on the first client platform. Alternatively, the second interactive media product may an electronic book, or some other type of interactive media product.

The method of Figure 6 may also include obtaining a second code, and determining that activating the second code enables the first capability in the first interactive media product and enables a third capability in the second interactive media product. This method may further include activating the second code, and, based on activation of the second code, enabling the first capability in the first interactive media product and enabling the third capability in the second interactive media product. Notably, the second code and the first code may enable the same capability in the first interactive media product, but different capabilities in the second interactive media product.

### 5. Conclusion

In summary, a first code may be obtained by a computing system. The computing system may support a first interactive media product and a second interactive media product. The first interactive media product and the second interactive media product may be thematically associated. It may be determined that activating the first code enables a first capability in the first interactive media product, and also enables a second capability in the second interactive media product. The first code may be activated, and based on activation of the first code, the first capability in the first interactive media product and the second capability in the second interactive media product may be enabled. The first capability and the second capability may be different.

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, functions described as steps, blocks, transmissions, communications, requests, responses, and/or messages can be executed out of order from that shown or discussed, including substantially concurrent or in reverse order, depending on the functionality involved. Further, more or fewer blocks and/or functions can be used with any of the ladder diagrams, scenarios, and flow charts discussed herein, and these ladder diagrams, scenarios, and flow charts can be combined with one another, in part or in whole.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical functions or actions in the method or technique. The program code and/or related data can be stored on any type of computer readable medium such as a storage device including a disk, hard drive, or other storage medium.

The computer readable medium can also include non-transitory computer readable media such as computer-readable media that store data for short periods of time like register memory, processor cache, and random access memory (RAM). The computer readable media can also include non-transitory computer readable media that store program code and/or data for longer periods of time. Thus, the computer readable media may include secondary or persistent long term storage, like read only memory (ROM), optical or magnetic disks, compact-disc read only memory (CD-ROM), for example. The computer readable media can also be any other volatile or non-volatile storage systems. A computer readable medium can be considered a computer readable storage medium, for example, or a tangible storage device.

Moreover, a step or block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method comprising:
obtaining, by a computing system including at least one computing device, a first code, wherein the computing system supports a first interactive media product and a second interactive media product, and wherein the first interactive media product and the second interactive media product are thematically associated;
determining that activating the first code enables a first capability in the first interactive media product and enables a second capability in the second interactive media product;
activating the first code; and
based on activation of the first code, enabling the first capability in the first interactive media product and enabling the second capability in the second interactive media product, wherein the first capability and the second capability are different.

2. The method of claim 1, wherein the first code comprises a text string obtained via an online portal.

3. The method of claim 1 or 2, wherein the first code comprises graphics.

4. The method of any preceding claim, wherein the first code is related to a non-interactive product that is thematically associated with the first interactive media product and the second interactive media product.

5. The method of any preceding claim, wherein the computing system includes accounts that facilitate holders of the accounts with access to the first interactive media product and the second interactive media product, and wherein the first code was generated in association with a particular account.

6. The method of any preceding claim, wherein the computing system includes accounts that facilitate holders of the accounts with access to the first interactive media product and the second interactive media product, and wherein activating the first code enables the first capability and the second capability for a particular account.

7. The method of any preceding claim, wherein the first interactive media product is a first video game that operates at least in part on a first client platform.

8. The method of claim 7, wherein the second interactive media product is a second video game that operates at least in part on a second client platform, wherein the second interactive media product does not operate on the first client platform.

9. The method of claim 7, wherein the second interactive media product is an electronic book.

10. The method of any preceding claim, further comprising:
obtaining a second code;
determining that activating the second code enables the first capability in the first interactive media product and enables a third capability in the second interactive media product;
activating the second code; and
based on activation of the second code, enabling the first capability in the first interactive media product and enabling the third capability in the second interactive media product.

11. Computer software that, upon execution by the computing system including at least one computing device, causes the computing system to perform the method of any preceding claim.

12. A computing system, including at least one computing device, comprising:
an online portal configured to receive a code; and
an interactive media product platform configured to support a first interactive media product and a second interactive media product, determine that activating the code enables a first capability in the first interactive media product and enables a second capability in the second interactive media product, activate the code, and based on activation of the code, enable the first capability in the first interactive media product and enable the second capability in the second interactive media product, wherein the first interactive media product and the second interactive media product are thematically associated, and wherein the first capability and the second capability are different.

13. The computing system of claim 12, wherein the code is related to a non-interactive product that is thematically associated with the first interactive media product and the second interactive media product.

14. The computing system of claim 11 or 12, wherein the computing system includes accounts that facilitate holders of the accounts with access to the first interactive media product and the second interactive media product, and wherein the code was generated in association with a particular account.

15. The computing system of any of claims 11 to 14, wherein the first interactive media product is a first video game that operates at least in part on a first client platform, and wherein the second interactive media product is a second video game that operates at least in part on a second client platform, wherein the second interactive media product does not operate on the first client platform.
